Europäisches Patentamt

European Patent Office

Office européen des brevets

(19)

(11) Numéro de publication: **0 249 519 B1**

(12) **FASCICULE DE BREVET EUROPEEN**

(45) Date de publication de fascicule du brevet:
**11.09.91**

(51) Int. Cl.⁵: **F01N 7/18, F16L 27/06,**
**F16J 15/12**

(21) Numéro de dépôt: **87401157.0**

(22) Date de dépôt: **22.05.87**

(54) **Procédé de fabrication d'un joint composite haute température.**

(30) Priorité: **02.06.86 FR 8607878**

(43) Date de publication de la demande:
**16.12.87 Bulletin 87/51**

(45) Mention de la délivrance du brevet:
**11.09.91 Bulletin 91/37**

(84) Etats contractants désignés:
**DE GB IT**

(56) Documents cités:
**DE-A- 1 526 557**
**DE-A- 2 912 347**
**DE-A- 3 042 226**
**US-A- 4 547 434**

(73) Titulaire: **JACQUES DUBOIS**
**82 rue A. Badin**
**F-76360 Barentin(FR)**

(72) Inventeur: **Brandener, Louis**
**80 Avenue F. Lefèbvre**
**F-78300 Poissy(FR)**

(74) Mandataire: **Fruchard, Guy et al**
**CABINET BOETTCHER 23, rue la Boétie**
**F-75008 Paris(FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention concerne un procédé de fabrication d'un joint composite haute température qui s'applique particulièrement, bien que non exclusivement, aux articulations d'échappement pour moteurs transversaux.

On sait que lors du montage d'une voiture, et plus particulièrement d'une voiture à moteur transversal, il est nécessaire de prévoir une articulation entre le collecteur d'échappement, fixé au moteur, et le tuyau d'échappement, fixé à la carrosserie et supportant le pot d'échappement. Afin d'absorber les mouvements relatifs entre le collecteur et le tuyau d'échappement et afin d'assurer l'étanchéité, cette articulation comporte généralement un joint à portée sphérique qui coopère avec une surface complémentaire du collecteur ou du tuyau d'échappement. Les brides de jonction entre le collecteur d'échappement et le tuyau d'échappement comportent également un jeu de ressorts qui maintiennent les pièces assemblées en pression contre le joint afin d'assurer l'étanchéité de la liaison entre le collecteur d'échappement et le pot d'échappement. Cette étanchéité est particulièrement importante dans les dispositifs d'échappement comportant un pot catalytique. En effet, ces dispositifs comprennent généralement une sonde au niveau du pot catalytique afin de déterminer la composition des gaz entrant dans le pot d'échappement Si l'étanchéité n'est pas convenablement assurée au niveau du joint entre le collecteur d'échappement et le tuyau d'échappement, de l'air rentre au niveau de ce joint et l'analyse effectuée par la sonde entraîne une augmentation de l'alimentation en carburant du moteur; il existe alors un risque important que du carburant non brûlé soit entraîné avec les gaz d'échappement et provoque une détérioration du catalyseur du pot d'échappement.

On connaît des joints de rotule réalisés par enroulement d'une bande de matériau composite comprenant une bande flexible de matériau réfractaire, par exemple du mica ou du graphite, et au moins une bande tricot métallique superposées, et par compression axiale de l'enroulement. Dans le joint obtenu, les mailles du tricot métallique sont imbriquées les unes dans les autres et les vides sont remplis par le matériau réfractaire qui flue à travers les mailles du tricot lors de la compression. Un tel joint, qui est décrit en particulier dans le document DE-A-3.042.226, est très rigide et ne comporte en particulier aucune élasticité axiale. Les vibrations du collecteur d'échappement sont donc entièrement transmises à la ligne d'échappement suspendue sous la voiture, ce qui risque d'augmenter le niveau sonore parasite à l'intérieur de l'habitacle et de créer, par déplacements relatifs, une perte d'étanchéité entre le collecteur et la ligne d'échappement.

Un but de la présente invention est de fabriquer un joint présentant une souplesse lui permettant d'absorber une partie des vibrations transmises à la ligne d'échappement et de maintenir une bonne étanchéité quelles que soient les circonstances. En vue de la réalisation de ce but, on prévoit, selon l'invention, un procédé de fabrication d'un joint composite haute température comportant les étapes de former une bande de matériau composite comprenant au moins une bande flexible de matériau réfractaire et au moins une bande de tricot métallique superposées, de réaliser une ébauche par enroulement de la bande de matériau composite sur elle-même selon au moins un tour et de comprimer l'enroulement selon une direction axiale de l'enroulement, dans lequel la bande flexible de matériau réfractaire comporte un segment de bande en fibres non tissées formant au moins un tour d'enroulement et au moins un segment de matériau réfractaire non fibreux au moins partiellement décalé longitudinalement par rapport au segment de bande en fibres non tissées et formant au moins un tour d'enroulement.

Ainsi, on obtient un joint d'étanchéité annulaire comprenant un tricot métallique dans lequel est emprisonnée une matière réfractaire qui, selon une section, comporte une partie centrale fibreuse au moins partiellement entourée d'une partie non fibreuse. On a constaté que le tricot métallique assure l'élasticité de la structure de l'ensemble, que la partie fibreuse de matière réfractaire assure la souplesse lui permettant d'absorber les vibrations par frictions sèches entre fibres, et que la partie de joint contenant la partie non fibreuse de matière réfractaire assure la cohésion du composite. De plus, dans le cas d'un joint comportant une face glissante, la partie non fibreuse de matière réfractaire s'étend de préférence le long de cette face et elle est choisie pour assurer un glissement amélioré du joint sur la surface complémentaire, qui peut être sphérique par exemple.

Selon une version avantageuse de l'invention, la bande de matériau composite comporte un segment de bande en fibres non tissées intercalé longitudinalement entre deux segments de matériau réfractaire non fibreux. Ainsi, lors de l'enroulement, le matériau réfractaire fibreux se trouve enserré entre des segments de bande de matériau réfractaire non fibreux et, après compression, la partie non fibreuse du matériau réfractaire entoure totalement la partie centrale fibreuse du matériau réfractaire.

De préférence, les segments de matériau réfractaire non fibreux ont une largeur plus grande que les segments en fibres non tissées. Ainsi, on s'assure qu'au voisinage des extrémités de l'enroulement, selon une direction axiale de celui-ci, on dispose d'une quantité de matière non fibreuse suffisante pour que le fluage de celle-ci provoque un recouvrement total de l'extrémité de la partie de matériau réfractaire fibreux.

D'autres caractéristiques et avantages de l'invention apparaîtront encore à la lecture de la description qui suit d'un mode de réalisation particulier en liaison avec les figures ci-jointes parmi lesquelles :

- la figure 1 est une vue de dessus de la bande de matériau composite utilisée pour la réalisation du joint selon l'invention,
- la figure 2 est une vue en coupe selon la ligne II-II de la figure 1,
- la figure 3 est une vue en coupe schématique d'un enroulement obtenu à partir de la bande de matériau composite selon l'invention,
- la figure 4 est une vue en coupe schématique selon la ligne IV-IV de la figure 3,
- la figure 5 est une vue en coupe d'un joint obtenu par le procédé selon l'invention.

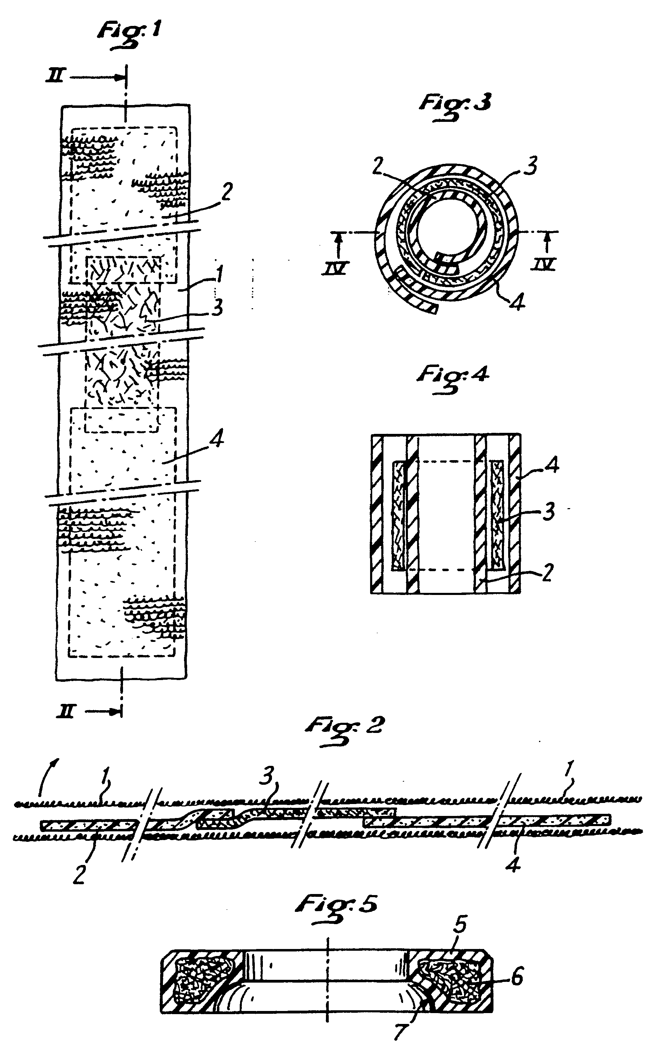

En référence aux figures 1 et 2, le procédé de fabrication d'un joint composite haute température est mis en oeuvre selon l'invention en réalisant tout d'abord une bande de matériau composite comprenant au moins une bande flexible de matériau réfractaire et au moins une bande tricot métallique superposées. Selon le mode de réalisation préféré illustré, le tricot métallique se présente sous la forme d'une chaussette 1 dans laquelle est introduit un segment de bande de matériau réfractaire non fibreux 2, par exemple un segment de bande de graphite. On introduit ensuite dans la chaussette 1 un second segment de bande de matériau réfractaire en fibres non tissées 3 dont une extrémité est glissée sous la bande de matériau réfractaire non fibreux 2.

La bande de matériau réfractaire en fibres non tissées 3 est de préférence un segment de feuille de silicate d'alumine.

On introduit enfin dans la chaussette 1 un segment de bande de matériau réfractaire non fibreux 4 dont une extrémité est glissée sous l'extrémité des segments de bande 3 opposée à l'extrémité juxtaposée avec le segment de bande 2.

On remarque sur la figure 1 que les segments de bande de matériau réfractaire non fibreux 2 et 4 ont de préférence une largeur plus grande que le segment en fibres non tissées 3 et les segments de bande se chevauchent partiellement. On remarque également qu'il n'est pas nécessaire que les extrémités de la chaussette de tricot métallique 1 coïncident exactement avec les extrémités des segments de bande de matériau réfractaire.

La bande de matériau composite est enroulée sur elle-même, éventuellement sur un noyau non représenté, et l'on obtient alors l'ébauche représentée sur les figures 3 et 4. Pour la clarté de ces figures, les couches de tricot 1 ne sont pas représentées. On constate sur la figure 3 que chacun des segments de bande forme au moins un tour d'enroulement.

L'ébauche est ensuite comprimée axialement d'une façon connue en soi et l'on obtient alors un joint composite haute température dont la coupe schématique est représenté sur la figure 5. Pour une meilleure compréhension, les fils métalliques n'ont pas été représentés sur la figure 5 qui est simplement destinée à montrer la répartition des matériaux réfractaires. On constate sur la figure 5 que la partie non fibreuse 5 de matière réfractaire entoure totalement la partie fibreuse 6 de matière réfractaire.

La figure 5 illustre un autre aspect de l'invention. En effet, dans les structures existances, les joints présentent des surfaces convexes qui coopèrent avec les surfaces concaves des collecteurs d'échappement, les joints ayant de préférence des volumes aussi faibles que possible. Au contraire, selon l'invention, on cherche à réaliser un joint contenant le plus possible de matière absorbant l'énergie, de façon à atténuer, à un maximum compatible avec l'encombrement limite, les vibrations transmises à la ligne d'échappement. Pour cela, on réalise selon l'invention un joint comportant une face 7 présentant un profil concave, de préférence centré sur l'axe du joint. On a constaté que pour une même longueur axiale du joint, on dispose ainsi d'un plus grand volume de matière. La surface concave du joint coopère alors avec une surface convexe prévue sur le collecteur d'échappement ou le tuyau d'échappement afin de former une rotule.

Pour des raisons de simplicité de mise en place, on peut prévoir de mettre les segments bout à bout dans la chaussette de tricot métallique, ou même de les espacer légèrement les uns des autres. De plus, si le joint doit être utilisé en étant enserré dans un boîtier, il n'est pas nécessaire de prévoir du matériau réfractaire non fibreux au niveau de la partie enserrée dans le boîtier et on peut donc adopter une configuration différente de celle illustrée pour la bande de matériau composite, par exemple en supprimant le segment 2 ou le segment 4, afin que, après compression, la partie de matière réfractaire fibreuse soit seulement partiellement entourée d'une partie non fibreuse, par exemple du côté de la partie sphérique du joint afin d'assurer un bon glissement de celui-ci.

## Revendications

1. Procédé de fabrication d'un joint composite haute température comportant les étapes de former une bande de matériau composite comprenant au moins une bande flexible de matériau réfractaire et au moins une bande de tricot métallique superposées, de réaliser une ébauche par enroulement de la bande de matériau composite sur elle-même selon au moins un tour et de comprimer l'enroulement selon une direction axiale de l'enroulement, caractérisé en ce que la bande flexible de matériau réfractaire comporte un segment de bande (3) en fibres non tissées formant au moins un tour d'enroulement et au moins un segment de matériau réfractaire non fibreux (2,4) au moins partiellement décalé longitudinalement par rapport au segment de bande en fibres non tissées et formant au moins un tour d'enroulement.

2. Procédé selon la revendication 1 caractérisé en ce que le matériau réfractaire en fibres non tissées est du silicate d'alumine.

3. Procédé selon l'une des revendications 1 ou 2, caractérisé en ce que les segments de bande se chevauchent partiellement.

4. Procédé selon l'une des revendications 1 à 3 caractérisé en ce que la bande de matériau composite comporte un segment de bande en fibres non tissées intercalé longitudinalement entre deux segments de matériau réfractaire non fibreux.

5. Procédé selon la revendication 4, caractérisé en ce que les segments de matériau réfractaire non fibreux ont une largeur plus grande que le segment en fibres non tissées.

## Claims

1. A method of manufacturing a high temperature composite gasket comprising the steps of forming a strip of composite material comprising at least one flexible strip of refractory material superposed on at least one strip of knitted metal, of making a blank by winding the strip of composite material on itself according to at least one turn, and in compressing the winding in the axial direction thereof, characterized in that the flexible strip of refractory material includes at least one strip segment (3) of non-woven fibers occupying at least one turn of the winding, and at least one segment of non-fibrous refractory material (2,4) at least partially offset in a longitudinal direction with respect to the strip segment of non--woven fibers and forming at least one turn of the winding.

2. A method according to claim 1, characterized in that the refractory material constituting the non-woven fibers is alumina-silicate.

3. A method according to claim 1 or 2, characterized in that the strip segments partially overlap one another.

4. A method according to any one of claims 1 to 3, characterized in that the strip of composite material includes a strip segment of non-woven fibers longitudinally lying between two segments of non-fibrous refractory material.

5. A method according to claim 4, characterized in that the segments of non-fibrous refractory material are wider than the segments of non-woven fibers.

## Patentansprüche

1. Verfahren zur Herstellung einer zusammengesetzten Hochtemperaturdichtung, umfassend die Schritte: Formen eines zusammengesetzten Materialbandes umfassend mindestens ein flexibles Band aus feuerfestem Material und mindestens ein Band aus Metallgewebe, die übereinanderliegen, Bilden eines Rohlings durch Einrollen des Bandes aus dem zusammengesetzten Material um mindestens eine Windung um sich selbst und Zusammendrücken der Wicklung in axialer Richtung der Wicklung, dadurch **gekennzeichnet,** daß das flexible Band aus feuerfestem Material ein mindestens eine Windung der Wicklung bildendes Bandsegment (3) aus nicht gewebten Fasern und mindestens ein Segment (2, 4) aus nicht faserförmigem feuerfestem Material hat, das mindestens teilweise in Längsrichtung gegenüber dem Bandsegment aus nicht gewebten Fasern versetzt ist und mindestens eine Windung der Wicklung bildet.

2. Verfahren nach Anspruch 1, dadurch **gekennzeichnet,** daß das feuerfeste Material aus nicht gewebten Fasern aus Aluminiumsilikat besteht.

3. Verfahren nach einem der Ansprüche 1 oder 2, dadurch **gekennzeichnet,** daß die Bandsegmente sich teilweise überlappen.

4. Verfahren nach einem der Ansprüche 1 bis 3, dadurch **gekennzeichnet,** daß das Band aus zusammengesetztem Material ein Bandsegment aus nicht gewebten Fasern umfaßt, das in Längsrichtung zwischen zwei Segmenten aus nicht faserförmigem feuerfestem Material angeordnet ist.

5. Verfahren nach Anspruch 4, dadurch **gekennzeichnet,** daß die Segmente aus nicht faserförmigem feuerfestem Material eine größere Breite als das Segment aus nicht gewebten Fasern haben.

EP 0 249 519 B1

Fig.1

Fig.3

Fig.4

Fig.2

Fig.5

6